# EUROPEAN PATENT SPECIFICATION

(11) **EP 3 267 933 B1**
(45) Date of publication and mention of the grant of the patent: **25.02.2026**
(21) Application number: 16762663.9
(22) Date of filing: 11.03.2016
(51) Int. Cl.: A61C 8/00, A61C 13/12

(54) **RESTORATION DENTAL IMPLANT SYSTEM AND METHOD**
ERSATZZAHNIMPLANTATSYSTEM UND -VERFAHREN
SYSTÈME D'IMPLANT DENTAIRE DE RESTAURATION ET PROCÉDÉ CORRESPONDANT

(30) Priority: 11.03.2015 US 201562131754 P; 29.11.2015 US 201514953358; 10.03.2016 US 201615067114
(43) Date of publication of application: 17.01.2018
(73) Proprietor: Novel Lab AG, 6060 Sarnen (CH)
(72) Inventor: DAFTARY, Fereidoun, Calabasas, CA 91302 (US); BAHAT, Oded, Beverly Hills, CA 90210 (US)
(74) Representative: GatesIP
(86) International application number: PCT/US2016/022161
(87) International publication number: WO 2016/145394

(56) References cited:
- EP-B1- 1 259 188
- WO-A1-2016/032560
- WO-A2-01/49199
- WO-A2-2011/083400
- WO-A2-2011/083400
- KR-B1- 100 666 245
- US-A- 4 468 200
- US-A- 4 468 200
- US-A1- 2011 129 797
- US-A1- 2011 129 797
- US-A1- 2014 106 305
- US-A1- 2016 058 529
- US-A1- 2016 058 529

## Description

### FIELD

The present invention relates to the field of dental implants.

### BACKGROUND

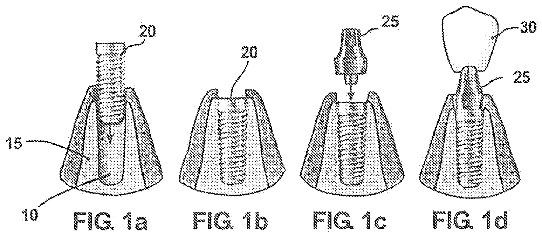

Restorations supported by dental implants with adjacent and/or opposing teeth have been performed by thousands of clinicians. An exemplary restoration process is shown in **Figures 1a****-d.** Referring to **Figures 1a**, an alveolus **10** is formed in a patient's jawbone **15** to accommodate a dental implant fixture **20.** Once the dental implant fixture **20** is securely in the alveolus **10** (shown in **Figure 1b**), an abutment member **25** is coupled with the dental implant fixture **20** (shown **Figures 1c****-d**). The restoration process is completed after tooth analogue **30** is coupled with the abutment member **25.**

In view of the recent research, it has been determined that some people with single-tooth and/or multiple-tooth implant restorations exhibit esthetic, functional, restorative and/or periodontal ramifications of subtle continued craniofacial growth that occurs after the implant restorations are performed.

Craniofacial growth may influence the relationship of implant restorations to the remaining teeth and jaw structure by, for example, causing changes in occlusion, causing migration of teeth with subsequent effect of opening contact, and/or causing changes to anterior esthetic.

Changes in occlusion can be due to continued growth in the arch containing the implants, as well as the opposing arch. In both situations, the position of the implants and associated restoration are static whereas the teeth are subject to movement in both facial and occlusal directions. These potential changes are not gender-specific. For situations such as posterior free-end implant restorations supporting significant occlusal loads, these movements can negate the effectiveness of the implant restoration over time, placing unfavorable stresses on the remaining dentition.

When natural teeth are present in the same arch with dental implants, an unforeseen long-term complication observed by many has been the opening of contacts between the implant restoration and typically the natural tooth anterior to the implant restoration. With loss of the natural tooth contact mesial to the implant restoration significantly affected by age and condition of the opposing dentition.

Besides functional changes and consequences in occlusion and opening of contacts, it has been observed that subtle growth over time also can change esthetic results once thought to be stable. Discrepancies have become manifest in three visible areas relative to adjacent teeth: the incisal edge length, the gingival margin height, and the facial contour alignment. Extrusion and up righting of the anterior teeth can simultaneously cause all three discrepancies. Thinning of labial soft/hard tissue over the implant or abutment can be a further consequence accompanying this subtle growth process.

A discrepancy in facial alignment making the anterior implant restoration relatively more labial may or may not be able to be suitability modified or revised, depending not only on the severity of the occurrence but also on such factors as implant axial alignment, available soft-tissue depth, and labial/palatal positioning of the implant in the ridge. A progressive discrepancy between the implant restoration's cervical gingival margin and that of the adjacent natural teeth may be an esthetic complication with no easy resolution.

Examples of dental implants to be anchored have been disclosed in US 4 468 200 A, US 2014/106305 A1, and KR 100 666 245 B1.

In view of the above, a need exists for an improved dental implant.

The implant according to the invention addresses the above and is defined in the subject matter of independent claim 1, wherein the dependent claims specify further embodiments.

### BRIEF DESCRIPTION OF THE FIGURES

FIGs. 1a-d depict restoration process known in the art.
FIGs. 2a-b depict dental implant known in the art.
FIG. 3a depicts a dental implant system according to some embodiments of the present disclosure.
FIG. 3b depicts a dental implant fixture according to some embodiments of the present disclosure.
FIG. 3c depicts a dental implant fixture according to some embodiments of the present disclosure.
FIG. 4 depicts a cross-sectional view of the dental implant fixture shown in FIG. 3b.
FIG. 5a depicts a top plan view of the dental implant fixture shown in FIG. 3b.
FIG. 5b depicts a bottom plan view of an abutment member according to some embodiments of the present disclosure.
FIG. 6 depicts another dental implant fixture according to some embodiments of the present disclosure.
FIG. 7a depicts the dental implant fixture according to some embodiments of the present disclosure.
FIG. 7b depicts a top plan view of the dental implant shown in FIG. 7a.
FIG. 7c depicts a cross-sectional view of the dental implant fixture shown in FIG. 7a.
FIG. 8 depicts a dental implant fixture according to some embodiments of the present disclosure.
FIG. 9 depicts a dental implant system according to some embodiments of the present disclosure.
FIG. 10 depicts a top plan view of the dental implant fixture shown in FIG. 9.
FIG. 11 depicts a bottom plan view of an abutment member according to some embodiments of the present disclosure.
FIG. 12a-d depict another dental implant system according to some embodiments of the present disclosure.
FIG. 13a-b depict another dental implant system according to some embodiments of the present disclosure.

In the following description, like reference numbers are used to identify like elements. Furthermore, the drawings are intended to illustrate major features of exemplary embodiments in a diagrammatic manner. The drawings are not intended to depict every feature of every implementation nor relative dimensions of the depicted elements, and are not drawn to scale.

### SUMMARY OF RELATED DISCLOSURE

In the following description, numerous specific details are set forth to clearly describe various specific embodiments disclosed herein. One skilled in the art, however, will understand that the presently claimed invention may be practiced without all of the specific details discussed below. In other instances, well known features have not been described so as not to obscure the invention.

Also, it is to be understood that the phraseology and terminology used herein is for the purpose of description and should not be regarded as limiting. The use of "including," "comprising," or "having" and variations thereof herein is meant to encompass the items listed thereafter and equivalents thereof as well as additional items. Unless limited otherwise, the terms "connected," "coupled," and "mounted," and variations thereof herein are used broadly and encompass direct and indirect connections, couplings, and mountings. In addition, the terms "connected" and "coupled" and variations thereof are not restricted to physical or mechanical connections or couplings.

According to one aspect, an implant fixture implantable in an alveolus of a patient's jawbone is presently disclosed. The implant fixture comprises an elongated shaft section, and a head section comprising at least one narrower side surface area, wherein the narrow side surface area provides an area for bone growth therein to compensate for jawbone deterioration adjacent to the implant fixture due to craniofacial growth

According to another aspect, an implant fixture implantable in an alveolus of a patient's jawbone is presently disclosed. The implant fixture comprises an elongated shaft section, and a head section, wherein the head section comprises at least one concave area for bone growth therein.

According to another aspect, an implant fixture implantable in an alveolus of a patient's jawbone is presently disclosed. The implant fixture comprises an elongated shaft section with a distal end, and a head section with a proximal end, wherein the head section comprises a first diameter adjacent to the elongated shaft section and a second diameter adjacent to the proximal end, wherein the elongated shaft section comprises a first diameter adjacent to the head section and a second diameter adjacent to the distal end, wherein the second diameter of the head section is less than the first diameter of the elongated shaft section.

According to another aspect, an implant fixture implantable in an alveolus of a patient's jawbone is presently disclosed. The implant fixture comprises an elongated shaft section, and a head section comprising a concavity along the head section's perimeter, wherein the concavity provides an area for bone growth therein to compensate for jawbone deterioration adjacent to the implant fixture due to craniofacial growth.

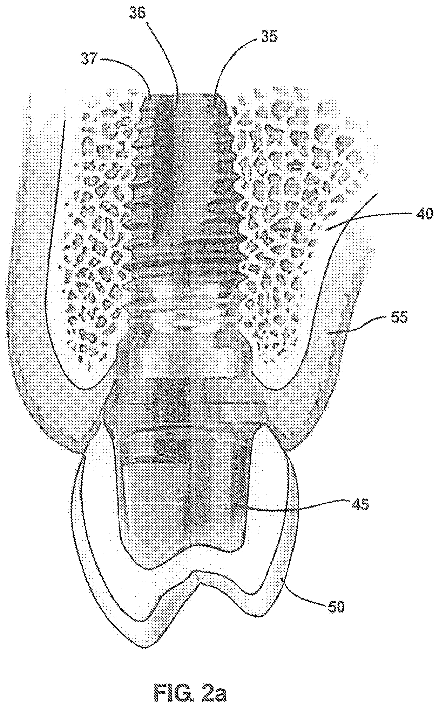

**Figure 2a** depicts a dental implant fixture **35** as known in the art embedded within an alveolus formed in a jawbone **40** and coupled with an abutment member **45** and tooth analogue **50.** The dental implant fixture **35** comprises a longitudinal groove (i.e. back cut) **36** extending from the narrow distal end **37** towards the abutment member **45.** The longitudinal groove **36** provides a greater surface area into which bone growth are formed to prevent the implant fixture **35** from vertical and rotational movements within the jawbone **40.**

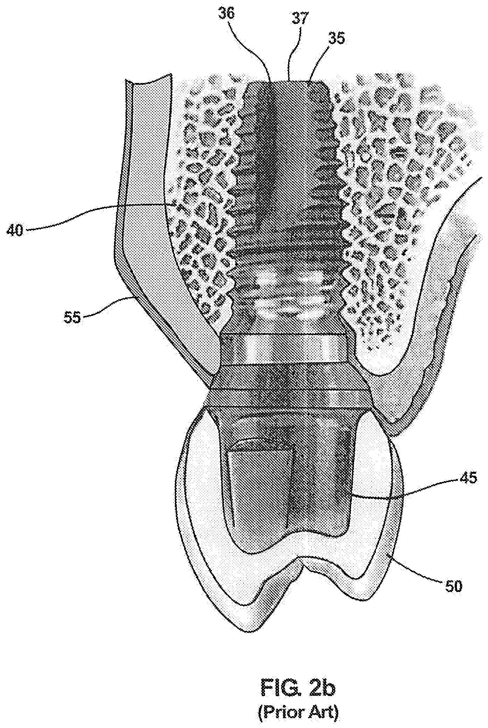

Due to craniofacial growth, over time, the jawbone **40** and/or soft tissue **55** may at least partially deteriorate adjacent to the dental implant fixture **35** to expose the dental implant fixture **35** and/or the abutment member **45** as shown in **Figure 2b****.** When this occurs, the dental implant fixture **35** is removed using processes known in the art. The process of removing the dental implant fixture **35** is complex at least in part due to the bone growth within the longitudinal groove **36** which prevent the dental implant fixture **35** from being unscrewed from the jawbone **40.**

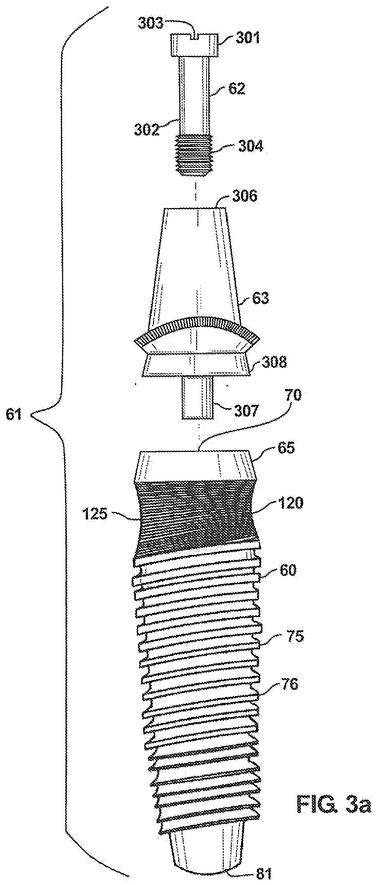

Referring to **Figure 3a****,** a dental implant system **61** is shown according to the present disclosure. In some embodiments, the dental implant system **61** comprises a bolt member **62,** an abutment member **63,** and a dental implant fixture **60.**

In some embodiments, the bolt member **62** comprises a head segment **301** and a shaft segment **302.** In some embodiments, the head segment **301** is generally disc shaped with a top notch or cross notch **303** or any other suitable means to accommodate a driving tool, for example, a screwdriver or any other tool for rotating the bolt member **62.** In some embodiments, the shaft segment **302** has one end coupled with the head segment **301.** In some embodiments, the shaft segment **302** comprises an outer screw threads **304** which are located opposite from the head segment **301** and extend along at least a portion of its length.

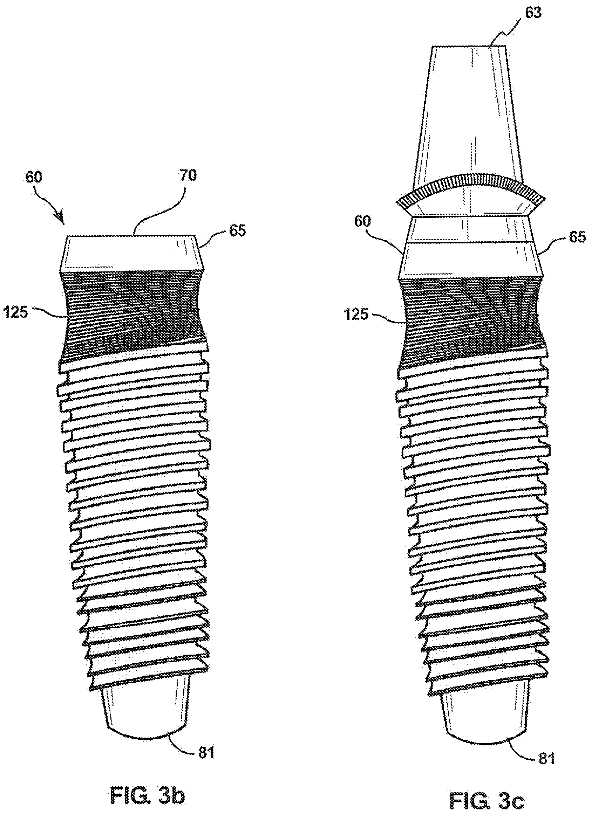

Referring to **Figure 3b****,** a dental implant fixture **60** is shown according to the present disclosure. In some embodiments presently disclosed, the dental implant fixture **60** comprises a head section **65** with a proximal end **70.** In some embodiments, the fixture **60** comprises an elongated shaft section **75** with a distal end **81.** In some embodiments, the head section **65** is integrally coupled with the shaft section **75** to form a one-piece implant fixture **60.** This prevents bacteria or other infection growth between the head section and the shaft section of the implant fixture **60.** In some embodiments, the elongated shaft section **75** is tapered.

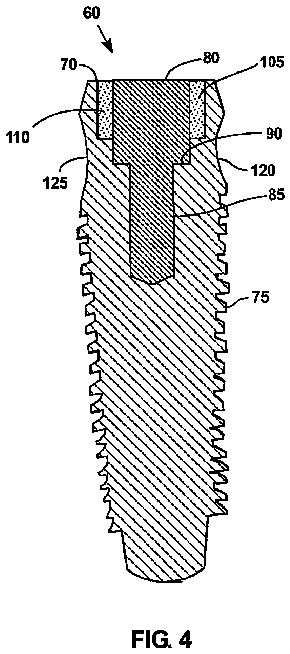

In some embodiments, the implant fixture **60** comprises a stepped interior closed bore **80** extending partially downward from the proximal end **70** into the shaft section **75.** In some embodiments, the stepped interior closed bore **80** is off-center. In some embodiments, the interior closed bore **80** comprises inner screw threads **85** along at least a portion of its length and an annular shelf **90** located above the inner screw threads **85** (as shown in **Figure 4**). In some embodiment, the inner screw threads **85** are configured to accommodate the outer screw threads **304** of the bolt member **62.** In some embodiments, the stepped interior closed bore **80** is configured to accommodate a protruding engagement end 307 (described in more detail below) of the abutment member **63.**

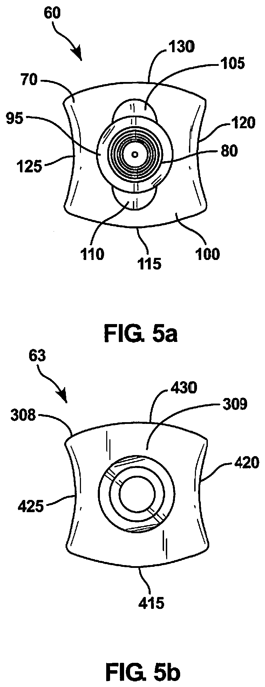

Referring to **Figure 5a**, a top plan view of the implant fixture **60** is shown according to some embodiments presently disclosed. In some embodiments, the proximal end **70** has a circular flat surface **95** surrounded by a periphery surface **100** comprising a long-axis and a short axis. In some embodiments, the proximal end **70** further comprises two or more apertures **105, 110** for accommodating small tips of a standard dental tool, for example, implant mount or hand driver for orienting the implant fixture **60** and/or antiroational means for the abutment member **63.** In some embodiments, the head section **65** comprises at least one narrower facial-side surface area **120** and at least one wider interproximal-side surface area **115.** The facial-side surface area **120** accommodates the contour of the gingival tissue at the facial-side of the patient's oral cavity, which is located adjacent to the interior surface of the patient's lip, while the interproximal-side surface area **115** accommodates the contour of the gingival tissue at the interproximal-side of the patient's oral cavity which is located adjacent to the patient's other tooth and/or implant. In some embodiments, the facial-side surface area **120** is concaved toward the center of the circular flat surface **95.**

In some embodiments, the head section **65** comprises a narrower lingual-side surface area **125** and at least one wider interproximal-side surface area **130.** The lingual-side surface area **125** accommodates the contour of the gingival tissue at the lingual-side of the patient's oral cavity which is located adjacent to the patient's tongue or palate, while the interproximal-side surface area **130** accommodates the contour of the gingival tissue at the interproximal-side of the patient's oral cavity which is located adjacent to the patient's other tooth and/or implant. In some embodiments, the lingual-side surface area **125** is concaved toward the center of the circular flat surface **95.**

In some embodiments, the facial-side surface area **120** and/or the lingual-side surface area **125** provide an area for bone growth therein to compensate for jawbone deterioration adjacent to the implant fixture **60** due to craniofacial growth. In some embodiments, the facial-side surface area **120** and/or the narrower lingual-side surface area **125** provide an arch shaped area for bone growth therein to compensate for jawbone deterioration adjacent to the implant fixture **60** due to craniofacial growth. In some embodiments, the facial-side surface area **120** and/or the narrower lingual-side surface area **125** provide a flat area for bone growth to compensate for jawbone deterioration adjacent to the implant fixture **60** due to craniofacial growth. In some embodiments, the facial-side surface area **120** and/or the narrower lingual-side surface area **125** provide a concave shaped area for bone growth therein to compensate for jawbone deterioration adjacent to the implant fixture **60** due to craniofacial growth. Increasing bone volume and/or soft tissue volume adjacent to the facial-side surface area **120** and/or the narrower lingual-side surface area **125** prevents early exposure of the implant fixture **60.**

In some embodiments, the facial-side surface area **120** and/or the lingual-side surface area **125** provide a concave shaped area to improve bone formation due to the gap between the existing bone and the facial-side surface area **120** and/or the lingual-side surface area **125.** In some embodiments, the facial-side surface area **120** and/or the lingual-side surface area **125** provide a concave shaped area to allow greater bone growth therein. In some embodiments, the facial-side surface area **120** and/or the lingual-side surface area **125** provide a concave shaped area to prevent/minimize pressure between the bone and the head section **65** during and/or immediately after the procedure. Preventing and/or minimizing pressure between the bone and the head section **65** during and/or immediately after the procedure prevent resorption of the bone around the head section **65** and/or allows increased bone formation around the head section **65.** In some embodiments, the facial-side surface area **120** and/or the lingual-side surface area **125** provide a concave shaped area to allow bone and/or soft tissue growth therein.

In some embodiments, the dental implant fixture **60** does not comprise the longitudinal groove **36** (shown in **Figures 2a****-b**) to prevent bone growth therein so as to allow the dental implant fixture **60** to be removed with less damage to patient's jawbone. In some embodiments, the facial-side surface area **120** and/or the lingual-side surface area **125** provide an area where bone growth can grow therein to prevent the implant fixture **60** from vertical and rotational movements within the patient's jawbone.

In some embodiments, the shaft section **75** comprises an outer screw thread **76** extending along at least a portion of its length. In some embodiments, the outer screw thread **76** is continuous. In some embodiments, the outer screw thread **76** is V-Thread, Square Thread, Buttress Thread, Reverse Buttress Thread or a combination of two or more of these threads. In some embodiments, the shaft section **75** comprises a substantially longitudinal groove or back cut (not shown) extending from the distal end **81** towards the head section **65.** The longitudinal groove (not shown) provides a greater surface area into which bone growth is formed to prevent the implant fixture **60** from vertical and rotational movements within the jawbone.

Referring to **Figure 3a****,** in some embodiments, an abutment member **63** comprises a distal end **306** with a circular opening to accommodate the shaft segment **302** of the bolt member **62.** Referring to **Figure 3a****,** in some embodiments, an abutment member **63** comprises a proximal portion **308** with a protruding engagement end **307** extending there from.

Referring to **Figure 5b****,** a bottom plan view of the abutment member **63** is shown according to some embodiments presently disclosed. According to some embodiments, the proximal portion **308** comprises a surface **309.** In some embodiments, the surface **309** comprises a long-axis and a short axis. In some embodiments, the proximal portion **308** comprises at least one narrower facial-side surface area **420** and at least one wider interproximal-side surface area **415.** In some embodiments, the facial-side surface area **420** is substantially similar to the facial-side surface area **120.** In some embodiments, the interproximal-side surface area **415** is substantially similar to the interproximal-side surface area **115.** In some embodiments, the facial-side surface area **420** is concaved toward the center of the abutment member **63.**

In some embodiments, the proximal portion **308** comprises a narrower lingual-side surface area **425** and at least one wider interproximal-side surface area **430.** In some embodiments, the lingual-side surface area **425** is substantially similar to the lingual-side surface area **125.** In some embodiments, the interproximal-side surface area **430** is substantially similar to the interproximal-side surface area **130.** In some embodiments, the lingual-side surface area **425** is concaved toward the center of the abutment member **63.**

In some embodiment, an abutment member **63** is configured to couple with the head section **65** as shown in **Figure 3c****.** In some embodiment, an abutment member **63** is configured to couple with the head section **65** so as to align the facial-side surface area **420** with the facial-side surface area **120.** In some embodiment, an abutment member **63** is configured to couple with the head section **65** so as to align the interproximal-side surface area **415** with the interproximal-side surface area **115.** In some embodiment, an abutment member **63** is configured to couple with the head section **65** so as to align the lingual-side surface area **425** with the lingual-side surface area **125.** In some embodiment, an abutment member **63** is configured to couple with the head section **65** so as to align the interproximal-side surface area **430** with the interproximal-side surface area **130.**

In some embodiments, the facial-side surface area **420** and/or the lingual-side surface area **425** provide an area for bone growth therein to compensate for jawbone deterioration adjacent to the abutment member **63** due to craniofacial growth. In some embodiments, the facial-side surface area **420** and/or the narrower lingual-side surface area **425** provide an arch shaped area for bone growth therein to compensate for jawbone deterioration adjacent to abutment member **63** due to craniofacial growth. In some embodiments, the facial-side surface area **420** and/or the narrower lingual-side surface area **425** provide a flat area for bone growth to compensate for jawbone deterioration adjacent to abutment member **63** due to craniofacial growth. In some embodiments, the facial-side surface area **420** and/or the narrower lingual-side surface area **425** provide a concave shaped area for bone growth therein to compensate for jawbone deterioration adjacent to abutment member **63** due to craniofacial growth. Increasing bone volume and/or soft tissue volume adjacent to the facial-side surface area **420** and/or the narrower lingual-side surface area **425** prevents early exposure of the abutment member **63.**

In some embodiments, the facial-side surface area **420** and/or the lingual-side surface area **425** provide a concave shaped area to improve bone formation due to the gap between the existing bone and the facial-side surface area **420** and/or the lingual-side surface area **425.** In some embodiments, the facial-side surface area **420** and/or the lingual-side surface area **425** provide a concave shaped area to allow greater bone growth therein. In some embodiments, the facial-side surface area **420** and/or the lingual-side surface area **425** provide a concave shaped area to prevent/minimize pressure between the bone and the abutment member **63** during and/or immediately after the procedure. Preventing and/or minimizing pressure between the bone and the abutment member **63** during and/or immediately after the procedure prevent resorption of the bone around the abutment member **63** and/or allows increased bone formation around the abutment member **63.** In some embodiments, the facial-side surface area **420** and/or the lingual-side surface area **425** provide a concave shaped area to allow bone and/or soft tissue growth therein.

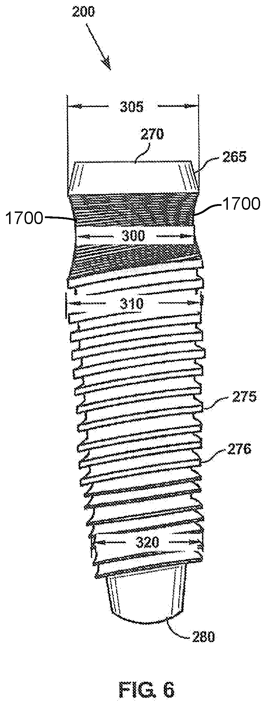

Referring to **Figure 6****,** a dental implant fixture **200** is shown according to the present disclosure. In some embodiments presently disclosed, the dental implant fixture **200** comprises a head section **265** with a proximal end **270.** In some embodiments, the fixture **200** comprises an elongated shaft section **275** with a distal end **280.** In some embodiments, the head section **265** is integrally coupled with the shaft section **275** to form a one-piece implant fixture **200.** This prevents bacteria or other infection growth between the head section and the shaft section of the implant fixture **200.** In some embodiments, the elongated shaft section **275** is tapered.

Referring to **Figure 6****,** in some embodiments, the head section **265** is substantially circular comprising a first head section diameter **300** adjacent to the shaft section **275** and comprising a second head section diameter **305** adjacent to the proximal end **270.** In some embodiments, the shaft section **275** is substantially circular comprising a first shaft diameter **310** adjacent to the head section **265** and comprising a second shaft diameter **320** adjacent to the distal end **280.** According to some embodiments, the head section **265** is substantially oval. According to some embodiments, the head section **265** is substantially triangular.

According to some embodiments, the head section **265** comprises a concavity/arch **1700** along the perimeter. According to some embodiments, the concavity **1700** is all the way around the dental implant fixture **200.**

According to some embodiments, the concavity **1700** is disposed between the shaft section **275** and the proximal end **270.** According to some embodiments, the narrowest portion of the concavity **1700** is represented by the first head section diameter **300.** According to some embodiments, the widest portion of the concavity **1700** is represented by the second head section diameter **305.** According to some embodiments, the widest portion of the concavity **1700** is represented by the first shaft diameter **310.**

In some embodiments, the first head section diameter **300** is less than the first shaft diameter **310.** In some embodiments, the second head section diameter **305** is less than the first shaft diameter **310.** In some embodiments, the first head section diameter **300** and the second head section diameter **305** are less than the first shaft diameter **310.** In some embodiments, the first head section diameter **300** and the second head section diameter **305** are substantially equal to the first shaft diameter **310.** In some embodiments, the second head section diameter **305** is substantially equal to the first shaft diameter **310.** In some embodiments, the first shaft diameter **310** is substantially equal to the second shaft diameter **320.** In some embodiments, the second shaft diameter **320** is less than the first shaft diameter **310.**

In some embodiments, the head section **265** provides an area for bone growth therein to compensate for jawbone deterioration adjacent to the implant fixture **200** due to craniofacial growth. In some embodiments, the head section **265** provides the arch **1700** shaped area for bone growth therein to compensate for jawbone deterioration adjacent to the implant fixture **200** due to craniofacial growth. In some embodiments, the head section **265** provides the concavity **1700** shaped area to allow bone growth therein to compensate for jawbone deterioration adjacent to the implant fixture **200** due to craniofacial growth. Increasing bone volume and/or soft tissue volume adjacent to the head section **265** prevents early exposure of the dental implant fixture **200.**

In some embodiments, the head section **265** provides a concave **1700** shaped area to improve bone formation due to the gap between the existing bone and the concave shaped area. In some embodiments, the head section **265** provides a concave **1700** shaped area to allow greater bone growth therein. In some embodiments, the head section **265** provides a concave **1700** shaped area to prevent/minimize pressure between the bone and the head section **265** during and/or immediately after the procedure. Preventing and/or minimizing pressure between the bone and the head section **265** during and/or immediately after the procedure prevent resorption of the bone around the head section **265** and/or allows increased bone formation around the head section **265.** In some embodiments, the head section **265** provides a concave **1700** shaped area to allow bone and/or soft tissue growth therein.

In some embodiments, the shaft section **275** comprises an outer screw thread **276** extending along at least a portion of its length. In some embodiments, the outer screw thread **276** is continuous. In some embodiments, the outer screw thread **276** is V-Thread, Square Thread, Buttress Thread, Reverse Buttress Thread or a combination of two or more of these threads. In some embodiments, the shaft section **275** comprises a substantially longitudinal groove (not shown) extending from the distal end **280** towards the head section **265.** The longitudinal groove (not shown) provides a greater surface area into which bone growth is formed to prevent the implant fixture **200** from vertical and rotational movements within the jawbone.

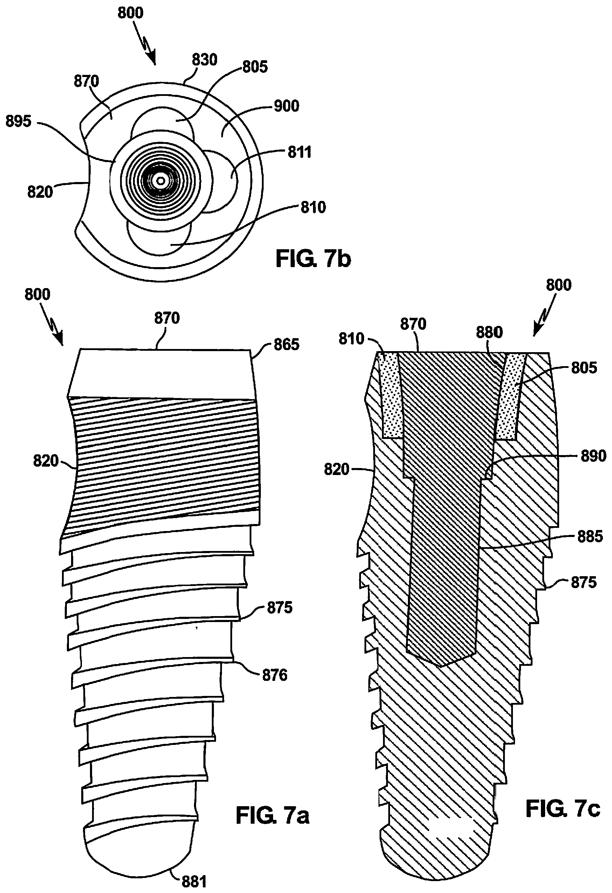

Referring to **Figures 7a****-c,** a dental implant fixture **800** is shown according to the present disclosure. In some embodiments presently disclosed, the dental implant fixture **800** comprises a head section **865** with a proximal end **870.** In some embodiments, the fixture **800** comprises an elongated shaft section **875** with a distal end **881.** In some embodiments, the head section **865** is integrally coupled with the shaft section **875** to form a one-piece implant fixture **800.** This prevents bacteria or other infection growth between the head section and the shaft section of the implant fixture **800.** In some embodiments, the elongated shaft section **875** is tapered.

In some embodiments, the implant fixture **800** comprises a stepped interior closed bore **880** extending partially downward from the proximal end **870** into the shaft section **875** as shown in **Figure 7c****.** In some embodiments, the stepped interior closed bore **880** is off-center. In some embodiments, the interior closed bore **880** comprises inner screw threads **885** along at least a portion of its length and an annular shelf **890** located above the inner screw threads **885** (as shown in **Figure 7c**). In some embodiment, the inner screw threads **885** are configured to accommodate the outer screw threads **304** of the bolt member **62.** In some embodiments, the stepped interior closed bore **880** is configured to accommodate a protruding engagement end **307** (described in more detail above) of the abutment member **63.**

Referring to **Figure 7b****,** a top plan view of the implant fixture **800** is shown according to some embodiments presently disclosed. In some embodiments, the proximal end **870** has a circular flat surface **895** surrounded by a periphery surface **900** comprising a long-axis and a short axis. In some embodiments, the proximal end **870** further comprises two or more apertures **805, 810, 811** for accommodating small tips of a standard dental tool, for example, implant mount or hand driver for orienting the implant fixture **800.** In some embodiments, the head section **865** comprises at least one narrower facial-side surface area **820** and at least one wider surface area **830.** The facial-side surface area **820** accommodates the contour of the gingival tissue at the facial-side of the patient's oral cavity, which is located adjacent to the interior surface of the patient's lip, while the surface area **830** accommodates the contour of the gingival tissue at the interproximal-side of the patient's oral cavity which is located adjacent to the patient's other tooth and/or implant. In some embodiments, the surface area **830** accommodates the contour of the gingival tissue at the lingual-side of the patient's oral cavity which is located adjacent to the patient's tongue or palate. In some embodiments, the surface area **830** accommodates the contour of the gingival tissue at the lingual-side of the patient's oral cavity which is located adjacent to the patient's tongue or palate and accommodates the contour of the gingival tissue at the interproximal-side of the patient's oral cavity which is located adjacent to the patient's other tooth and/or implant(s). In some embodiments, the facial-side surface area **820** is concaved toward the center of the implant fixture **800.**

In some embodiments, the facial-side surface area **820** provides an area for bone growth therein to compensate for jawbone deterioration adjacent to the implant fixture **800** due to craniofacial growth. In some embodiments, the facial-side surface area **820** provides an arch shaped area for bone growth therein to compensate for jawbone deterioration adjacent to the implant fixture **800** due to craniofacial growth. In some embodiments, the facial-side surface area **820** provides a flat area for bone growth to compensate for jawbone deterioration adjacent to the implant fixture **800** due to craniofacial growth. In some embodiments, the facial-side surface area **820** provides a concave shaped area for bone growth therein to compensate for jawbone deterioration adjacent to the implant fixture **800** due to craniofacial growth. Increasing bone volume and/or soft tissue volume adjacent to the facial-side surface area **820** prevents early exposure of the implant fixture **800.**

In some embodiments, the facial-side surface area **820** provides a concave shaped area to improve bone formation due to the gap between the existing bone and the facial-side surface area **820.** In some embodiments, the facial-side surface area **820** provides a concave shaped area to allow greater bone growth therein. In some embodiments, the facial-side surface area **820** provides a concave shaped area to prevent/minimize pressure between the bone and the implant fixture **800** during and/or immediately after the procedure. Preventing and/or minimizing pressure between the bone and the implant fixture **800** during and/or immediately after the procedure prevent resorption of the bone around the implant fixture **800** and/or allows increased bone formation around the implant fixture **800.** In some embodiments, the facial-side surface area **820** provides a concave shaped area to allow bone and/or soft tissue growth therein.

In some embodiments, the dental implant fixture **800** does not comprise the longitudinal groove **36** (shown in **Figures 2a****-b**) to prevent bone growth therein so as to allow the dental implant fixture **800** to be removed with less damage to patient's jawbone. In some embodiments, the facial-side surface area **820** provides an area where bone growth can grow therein to prevent the implant fixture **800** from vertical and rotational movements within the patient's jawbone.

In some embodiments, the shaft section **875** comprises an outer screw thread **876** (shown in **Figure 7a**) extending along at least a portion of its length. In some embodiments, the outer screw thread **876** is continuous. In some embodiments, the outer screw thread **876** is V-Thread, Square Thread, Buttress Thread, Reverse Buttress Thread or a combination of two or more of these threads. In some embodiments, the shaft section **875** comprises a substantially longitudinal groove or back cut (not shown) extending from the distal end **881** towards the head section **865.** The longitudinal groove (not shown) provides a greater surface area into which bone growth is formed to prevent the implant fixture **800** from vertical and rotational movements within the jawbone.

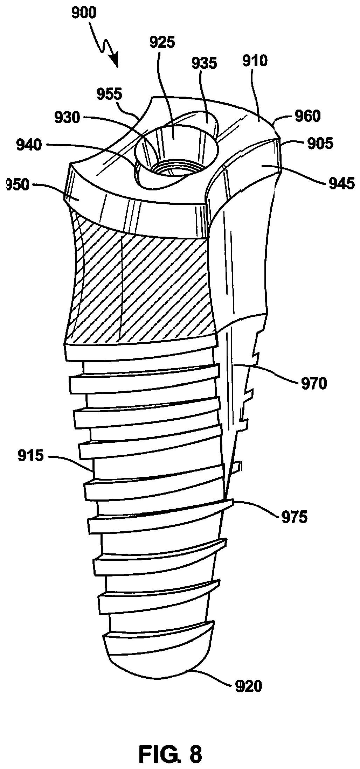

Referring to **Figure 8****,** a dental implant fixture **900** is shown according to the present disclosure. In some embodiments presently disclosed, the dental implant fixture **900** comprises a head section **905** with a proximal end **910.** In some embodiments, the fixture **900** comprises an elongated shaft section **915** with a distal end **920.** In some embodiments, the head section **905** is integrally coupled with the shaft section **915** to form a one-piece implant fixture **900.** This prevents bacteria or other infection growth between the head section and the shaft section of the implant fixture **900.** In some embodiments, the elongated shaft section **915** is tapered.

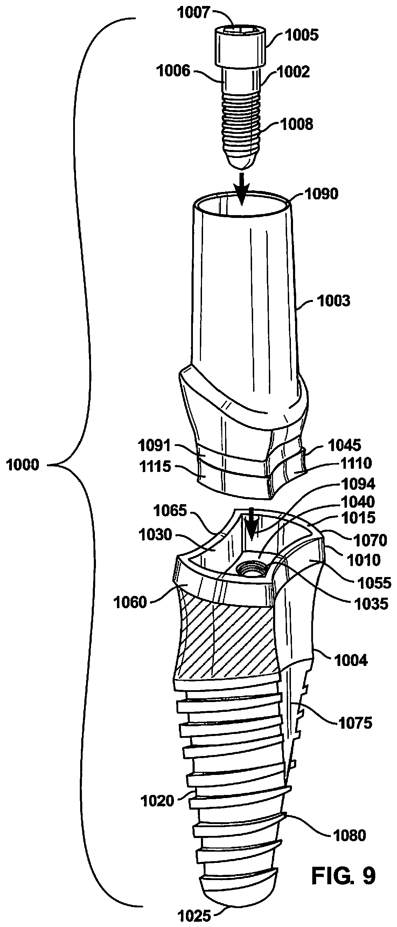

In some embodiments, the implant fixture **900** comprises a stepped interior closed bore **925** extending partially downward from the proximal end **910** into the shaft section **915.** In some embodiments, the stepped interior closed bore **925** is off-center. In some embodiments, the interior closed bore **925** comprises inner screw threads **930** along at least a portion of its length. In some embodiment, the inner screw threads **930** are configured to accommodate the outer screw threads **304** of the bolt member **62.** In some embodiments, the stepped interior closed bore **925** is configured to accommodate a protruding engagement end **307** (described in more detail above) of the abutment member **63.** Although the interior closed bore **925** is shown as being circular, it is to be understood that the interior closed bore **925** can be any shape as discussed further below with respect to **Figure 9****.**

In some embodiments, the proximal end **910** comprises two or more apertures **935, 940** for accommodating small tips of a standard dental tool, for example, implant mount or hand driver for orienting the implant fixture **900.** In some embodiments, the head section **905** comprises at least one narrower facial-side surface area **945** and at least one wider interproximal-side surface area **950.** The facial-side surface area **945** accommodates the contour of the gingival tissue at the facial-side of the patient's oral cavity, which is located adjacent to the interior surface of the patient's lip, while the interproximal-side surface area **950** accommodates the contour of the gingival tissue at the interproximal-side of the patient's oral cavity which is located adjacent to the patient's other tooth and/or implant. In some embodiments, the facial-side surface area **945** is concaved toward the center of the bore **925.**

In some embodiments, the head section **905** comprises a narrower lingual-side surface area **955** and at least one wider interproximal-side surface area **960.** The lingual-side surface area **955** accommodates the contour of the gingival tissue at the lingual-side of the patient's oral cavity which is located adjacent to the patient's tongue or palate, while the interproximal-side surface area **960** accommodates the contour of the gingival tissue at the interproximal-side of the patient's oral cavity which is located adjacent to the patient's other tooth and/or implant. In some embodiments, the lingual-side surface area **955** is concaved toward the center of the bore **925.**

In some embodiments, the facial-side surface area **945** and/or the lingual-side surface area **955** provide an area for bone growth therein to compensate for jawbone deterioration adjacent to the implant fixture **900** due to craniofacial growth. In some embodiments, the facial-side surface area **945** and/or the narrower lingual-side surface area **955** provide an arch shaped area for bone growth therein to compensate for jawbone deterioration adjacent to the implant fixture **900** due to craniofacial growth. In some embodiments, the facial-side surface area **945** and/or the narrower lingual-side surface area **955** provide a flat area for bone growth to compensate for jawbone deterioration adjacent to the implant fixture **900** due to craniofacial growth. In some embodiments, the facial-side surface area **945** and/or the narrower lingual-side surface area **955** provide a concave shaped area for bone growth therein to compensate for jawbone deterioration adjacent to the implant fixture **900** due to craniofacial growth. Increasing bone volume and/or soft tissue volume adjacent to the facial-side surface area **945** and/or the narrower lingual-side surface area **955** prevents early exposure of the implant fixture **900.**

In some embodiments, the facial-side surface area **945** and/or the lingual-side surface area **955** provide a concave shaped area to improve bone formation due to the gap between the existing bone and the facial-side surface area **945** and/or the lingual-side surface area **955.** In some embodiments, the facial-side surface area **945** and/or the lingual-side surface area **955** provide a concave shaped area to allow greater bone growth therein. In some embodiments, the facial-side surface area **945** and/or the lingual-side surface area **955** provide a concave shaped area to prevent/minimize pressure between the bone and the head section **905** during and/or immediately after the procedure. Preventing and/or minimizing pressure between the bone and the head section **905** during and/or immediately after the procedure prevent resorption of the bone around the head section **905** and/or allows increased bone formation around the head section **905.** In some embodiments, the facial-side surface area **945** and/or the lingual-side surface area **955** provide a concave shaped area to allow bone and/or soft tissue growth therein.

In some embodiments, the dental implant fixture **900** comprises a longitudinal groove **970** to allow bone growth therein to prevent the implant fixture **900** from vertical and rotational movements within the patient's jawbone. In some embodiments, the facial-side surface area **945** and/or the lingual-side surface area **955** provide an area where bone growth can grow therein to prevent the implant fixture **900** from vertical and rotational movements within the patient's jawbone.

In some embodiments, the shaft section **915** comprises an outer screw thread **975** extending along at least a portion of its length. In some embodiments, the outer screw thread **975** is continuous. In some embodiments, the outer screw thread **975** is V-Thread, Square Thread, Buttress Thread, Reverse Buttress Thread or a combination of two or more of these threads. In some embodiments, the shaft section **915** comprises a substantially longitudinal groove or back cut (not shown) extending from the distal end **920** towards the head section **905.** The longitudinal groove (not shown) provides a greater surface area into which bone growth is formed to prevent the implant fixture **900** from vertical and rotational movements within the jawbone.

Referring to **Figure 9****,** a dental implant system **1000** is shown according to the present disclosure. In some embodiments, the dental implant system **1000** comprises a bolt member **1002,** an abutment member **1003,** and a dental implant fixture **1004.**

In some embodiments, the bolt member **1002** comprises a head segment **1005** and a shaft segment **1006.** In some embodiments, the head segment **1005** is generally disc shaped with a top notch **1007** or any other suitable means to accommodate a driving tool, for example, a screwdriver or any other tool for rotating the bolt member **1002.** In some embodiments, the shaft segment **1006** has one end coupled with the head segment **1005.** In some embodiments, the shaft segment **1006** comprises an outer screw threads **1008** which are located opposite from the head segment **1005** and extend along at least a portion of its length.

Referring to **Figure 9****,** in some embodiments presently disclosed, the dental implant fixture **1004** comprises a head section **1010** with a proximal end **1015.** In some embodiments, the fixture **1004** comprises an elongated shaft section **1020** with a distal end **1025.** In some embodiments, the head section **1010** is integrally coupled with the shaft section **1020** to form a one-piece implant fixture **1004.** This prevents bacteria or other infection growth between the head section and the shaft section of the implant fixture **1004.** In some embodiments, the elongated shaft section **1020** is tapered.

In some embodiments, the implant fixture **1004** comprises a stepped interior closed bore **1030** extending partially downward from the proximal end **1015** into the shaft section **1020.** In some embodiments, the stepped interior closed bore **1030** is off-center. In some embodiments, the interior closed bore **1030** comprises inner screw threads **1035** along at least a portion of its length and an annular shelf **1040** located above the inner screw threads **1035** (as shown in **Figure 9**). In some embodiments, the inner screw threads **1035** are configured to accommodate the outer screw threads **1008** of the bolt member **1002.** In some embodiments, the stepped interior closed bore **1030** is configured to accommodate a protruding engagement end **1045** (described in more detail below) of the abutment member **1003.**

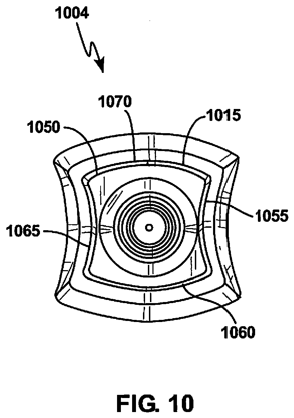

Referring to **Figure 10****,** a top plan view of the implant fixture **1004** is shown according to some embodiments presently disclosed. In some embodiments, the proximal end **1015** has a periphery surface **1050** comprising a long-axis and a short axis. In some embodiments, the stepped interior closed bore **1030** is configured to accommodate a dental tool for orienting the implant fixture **1004.** In some embodiments, the head section **1010** comprises at least one narrower facial-side surface area **1055** and at least one wider interproximal-side surface area **1060.** The facial-side surface area **1055** accommodates the contour of the gingival tissue at the facial-side of the patient's oral cavity, which is located adjacent to the interior surface of the patient's lip, while the interproximal-side surface area **1060** accommodates the contour of the gingival tissue at the interproximal-side of the patient's oral cavity which is located adjacent to the patient's other tooth and/or implant. In some embodiments, the facial-side surface area **1055** is concaved toward the center of the interior closed bore **1030.**

In some embodiments, the head section **1010** comprises a narrower lingual-side surface area **1065** and at least one wider interproximal-side surface area **1070.** The lingual-side surface area **1065** accommodates the contour of the gingival tissue at the lingual-side of the patient's oral cavity which is located adjacent to the patient's tongue or palate, while the interproximal-side surface area **1070** accommodates the contour of the gingival tissue at the interproximal-side of the patient's oral cavity which is located adjacent to the patient's other tooth and/or implant. In some embodiments, the lingual-side surface area **1065** is concaved toward the center of the interior closed bore **1030.**

In some embodiments, the facial-side surface area **1055** and/or the lingual-side surface area **1065** provide an area for bone growth therein to compensate for jawbone deterioration adjacent to the implant fixture **1004** due to craniofacial growth. In some embodiments, the facial-side surface area **1055** and/or the narrower lingual-side surface area **1065** provide an arch shaped area for bone growth therein to compensate for jawbone deterioration adjacent to the implant fixture **1004** due to craniofacial growth. In some embodiments, the facial-side surface area **1055** and/or the narrower lingual-side surface area **1065** provide a flat area for bone growth to compensate for jawbone deterioration adjacent to the implant fixture **1004** due to craniofacial growth. In some embodiments, the facial-side surface area **1055** and/or the narrower lingual-side surface area **1065** provide a concave shaped area for bone growth therein to compensate for jawbone deterioration adjacent to the implant fixture **1004** due to craniofacial growth. Increasing bone volume and/or soft tissue volume adjacent to the facial-side surface area **1055** and/or the narrower lingual-side surface area **1065** prevents early exposure of the implant fixture **1004.**

In some embodiments, the facial-side surface area **1055** and/or the lingual-side surface area **1065** provide a concave shaped area to improve bone formation due to the gap between the existing bone and the facial-side surface area **1055** and/or the lingual-side surface area **1065.** In some embodiments, the facial-side surface area **1055** and/or the lingual-side surface area **1065** provide a concave shaped area to allow greater bone growth therein. In some embodiments, the facial-side surface area **1055** and/or the lingual-side surface area **1065** provide a concave shaped area to prevent/minimize pressure between the bone and the head section **1010** during and/or immediately after the procedure. Preventing and/or minimizing pressure between the bone and the head section **1010** during and/or immediately after the procedure prevent resorption of the bone around the head section **1010** and/or allows increased bone formation around the head section **1010.** In some embodiments, the facial-side surface area 155 and/or the lingual-side surface area **165** provide a concave shaped area to allow bone and/or soft tissue growth therein.

In some embodiments, the dental implant fixture **1004** does not comprise the longitudinal groove **36** (shown in **Figures 2a****-b**) to prevent bone growth therein so as to allow the dental implant fixture **1004** to be removed with less damage to patient's jawbone. In some embodiments, the dental implant fixture **1004** comprises a longitudinal groove **1075** to allow bone growth therein. In some embodiments, the facial-side surface area **1055** and/or the lingual-side surface area **1065** provide an area where bone growth can grow therein to prevent the implant fixture **1004** from vertical and rotational movements within the patient's jawbone.

In some embodiments, the shaft section **1020** comprises an outer screw thread **1080** extending along at least a portion of its length. In some embodiments, the outer screw thread **1080** is continuous. In some embodiments, the outer screw thread **1080** is V-Thread, Square Thread, Buttress Thread, Reverse Buttress Thread or a combination of two or more of these threads. In some embodiments, the shaft section **1020** comprises a substantially longitudinal groove or back cut (not shown) extending from the distal end **1025** towards the head section **1010.** The longitudinal groove (not shown) provides a greater surface area into which bone growth is formed to prevent the implant fixture **1004** from vertical and rotational movements within the jawbone.

Referring to **Figure 9****,** in some embodiments, an abutment member **1003** comprises a distal end **1090** with, for example, a circular opening to accommodate the shaft segment **1006** of the bolt member **1002.** Referring to **Figure 9****,** in some embodiments, an abutment member **1002** comprises a proximal portion **1091** with a protruding engagement end **1045** extending there from.

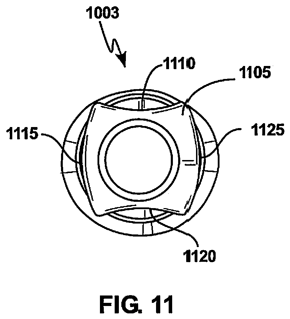

Referring to **Figure 11****,** a bottom plan view of the abutment member **1003** is shown according to some embodiments presently disclosed. According to some embodiments, the protruding engagement end **1045** comprises a surface **1105.** In some embodiments, the surface **1105** comprises a long-axis and a short axis. In some embodiments, the protruding engagement end **1045** comprises at least one narrower facial-side surface area **1110** and at least one wider interproximal-side surface area **1115.** In some embodiments, the facial-side surface area **1110** is substantially similar to the facial-side surface area **1055.** In some embodiments, the interproximal-side surface area **1115** is substantially similar to the interproximal-side surface area **1060.** In some embodiments, the facial-side surface area **1110** is concaved toward the center of the abutment member **1003.**

In some embodiments, the protruding engagement end **1045** comprises a narrower lingual-side surface area **1120** and at least one wider interproximal-side surface area **1125.** In some embodiments, the lingual-side surface area **1120** is substantially similar to the lingual-side surface area **1065.** In some embodiments, the interproximal-side surface area **1125** is substantially similar to the interproximal-side surface area **1070.** In some embodiments, the lingual-side surface area **1120** is concaved toward the center of the abutment member **1003.**

In some embodiment, an abutment member **1003** is configured to couple with the head section **1010** as shown in **Figure 9** by arrow **1094.** In some embodiment, an abutment member **1003** is configured to couple with the head section **1010** so as to align the facial-side surface area **1110** with the facial-side surface area **1055.** In some embodiment, an abutment member **1003** is configured to couple with the head section **1010** so as to align the lingual-side surface area **1120** with the lingual-side surface area **1065.**

In some embodiments, the facial-side surface area **1110** and/or the lingual-side surface area **1120** provide a concave shaped area for bone and soft tissue formation therein to compensate for jawbone deterioration adjacent to the abutment member **1003** due to craniofacial growth. In some embodiments, the facial-side surface area **1110** and/or the narrower lingual-side surface area **1120** provide an arch shaped area for bone growth and soft tissue formation therein to compensate for jawbone deterioration adjacent to abutment member **1003** due to craniofacial growth. In some embodiments, the facial-side surface area **1110** and/or the narrower lingual-side surface area **1120** provide a flat area for bone growth and soft tissue formation to compensate for jawbone deterioration adjacent to abutment member **1003** due to craniofacial growth. In some embodiments, the facial-side surface area **1110** and/or the narrower lingual-side surface area **1120** provide a concave shaped area for bone and soft tissue formation therein to compensate for jawbone deterioration adjacent to abutment member **1003** due to craniofacial growth. Increasing bone volume and/or soft tissue volume adjacent to the facial-side surface area **1110** and/or the narrower lingual-side surface area **1120** prevents early exposure of the abutment member **1003.**

In some embodiments, the facial-side surface area **1110** and/or the lingual-side surface area **1120** provide a concave shaped area to improve bone formation due to the gap between the existing bone and the facial-side surface area **1110** and/or the lingual-side surface area **1120.** In some embodiments, the facial-side surface area **1110** and/or the lingual-side surface area **1120** provide a concave shaped area to allow greater bone growth therein. In some embodiments, the facial-side surface area **1110** and/or the lingual-side surface area **1120** provide a concave shaped area to prevent/minimize pressure between the bone and the abutment member **1003** during and/or immediately after the procedure. Preventing and/or minimizing pressure between the bone and the abutment member **1003** during and/or immediately after the procedure prevent resorption of the bone around the abutment member **1003** and/or allows increased bone formation around the abutment member **1003.** In some embodiments, the facial-side surface area **1110** and/or the lingual-side surface area **1120** provide a concave shaped area to allow bone and/or soft tissue growth therein.

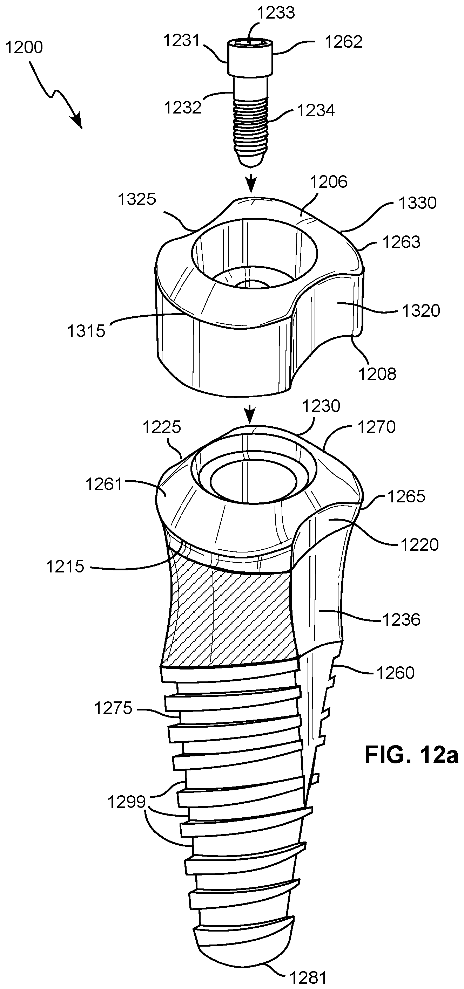

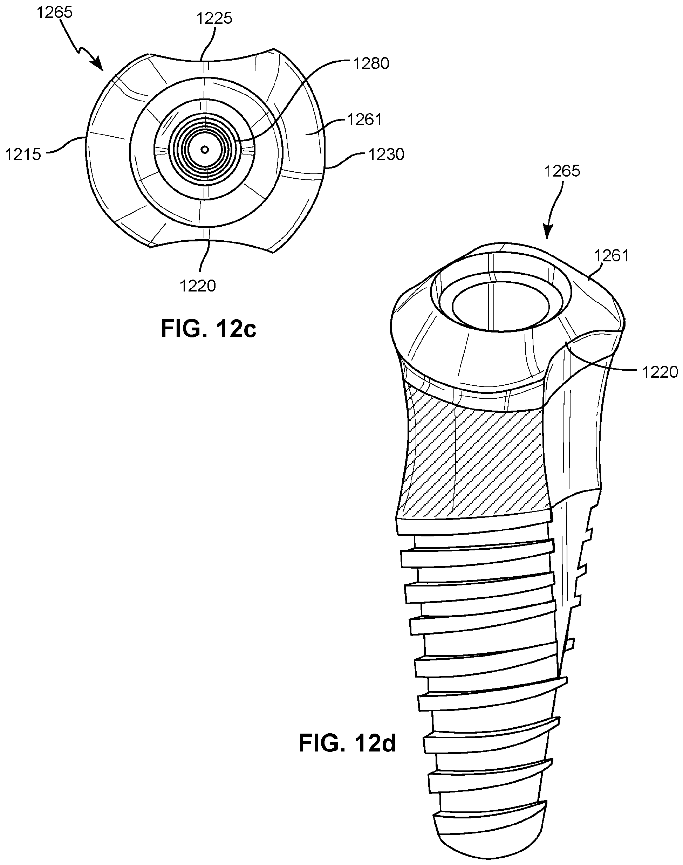

Referring to **Figures 12a****-b,** a dental implant system **1200** is shown according to the present disclosure. In some embodiments, the dental implant system **1200** comprises a bolt member **1262,** a healing cap **1263,** and a dental implant fixture **1260.** According to some embodiments, the dental implant system **1200** further comprises an abutment member (not shown).

In some embodiments, the bolt member **1262** comprises a head segment **1231** and a shaft segment **1232.** In some embodiments, the head segment **1231** is generally disc shaped with a top notch **1233** or any other suitable means to accommodate a driving tool, for example, a screwdriver or any other tool for rotating the bolt member **1262.** In some embodiments, the shaft segment **1232** has one end coupled with the head segment **1231.** In some embodiments, the shaft segment **1232** comprises an outer screw threads **1234** which are located opposite from the head segment **1231** and extend along at least a portion of its length.

Referring to **Figures 12a****-b,** a dental implant fixture **1260** is shown according to the present disclosure. In some embodiments presently disclosed, the dental implant fixture **1260** comprises a head section **1265** with a proximal end **1270.** In some embodiments, the fixture **1260** comprises an elongated shaft section **1275** with a distal end **1281.** In some embodiments, the head section **1265** is integrally coupled with the shaft section **1275** to form a one-piece implant fixture **1260.** This prevents bacteria or other infection growth between the head section and the shaft section of the implant fixture **1260.** In some embodiments, the elongated shaft section **1275** is tapered. According to some embodiments, the head section **1265** is elliptically shaped. According to some embodiments, the head section **1265** is triangularly shaped. According to some embodiments, the head section **1265** is circularly shaped.

In some embodiments, the implant fixture **1260** comprises a stepped interior closed bore **1280** extending partially downward from the proximal end **1270** into the shaft section **1275.** In some embodiments, the stepped interior closed bore **1280** is off-center. In some embodiments, the interior closed bore **1280** comprises inner screw threads (not shown) along at least a portion of its length and an annular shelf (not shown) located above the inner screw threads (not shown). In some embodiment, the inner screw threads (not shown) are configured to accommodate the outer screw threads **1234** of the bolt member **1262.**

Referring to **Figures 12a****-c,** in some embodiments, the proximal end **1270** has a bevel periphery surface **1261** comprising a long-axis and a short axis. According to some embodiments, the proximal end **1270** has a flat surface **1261** comprising a long-axis and a short axis. In some embodiments, the head section **1265** comprises at least one narrower facial-side surface area **1220** and at least one wider interproximal-side surface area **1215.** The facial-side surface area **1220** accommodates the contour of the gingival tissue at the facial-side of the patient's oral cavity, which is located adjacent to the interior surface of the patient's lip, while the interproximal-side surface area **1215** accommodates the contour of the gingival tissue at the interproximal-side of the patient's oral cavity which is located adjacent to the patient's other tooth and/or implant. In some embodiments, the facial-side surface area **1220** is concaved toward the center of the surface **1261.**

In some embodiments, the head section **1265** comprises a narrower lingual-side surface area **1225** and at least one wider interproximal-side surface area **1230.** The lingual-side surface area **1225** accommodates the contour of the gingival tissue at the lingual-side of the patient's oral cavity which is located adjacent to the patient's tongue or palate, while the interproximal-side surface area **1230** accommodates the contour of the gingival tissue at the interproximal-side of the patient's oral cavity which is located adjacent to the patient's other tooth and/or implant. In some embodiments, the lingual-side surface area **1225** is concaved toward the center of the surface **1261.**

In some embodiments, the facial-side surface area **1220** and/or the lingual-side surface area **1225** provide an area for bone growth therein to compensate for jawbone deterioration adjacent to the implant fixture **1260** due to craniofacial growth. In some embodiments, the facial-side surface area **1220** and/or the narrower lingual-side surface area **1225** provide an arch shaped area for bone growth therein to compensate for jawbone deterioration adjacent to the implant fixture **1260** due to craniofacial growth. In some embodiments, the facial-side surface area **1220** and/or the narrower lingual-side surface area **1225** provide a flat area for bone growth to compensate for jawbone deterioration adjacent to the implant fixture **1260** due to craniofacial growth. In some embodiments, the facial-side surface area **1220** and/or the narrower lingual-side surface area **1225** provide a concave shaped area for bone growth therein to compensate for jawbone deterioration adjacent to the implant fixture **1260** due to craniofacial growth. Increasing bone volume and/or soft tissue volume adjacent to the facial-side surface area **1220** and/or the narrower lingual-side surface area **1225** prevents early exposure of the implant fixture **1260.**

In some embodiments, the facial-side surface area **1220** and/or the lingual-side surface area **1225** provide a concave shaped area to improve bone formation due to the gap between the existing bone and the facial-side surface area **1220** and/or the lingual-side surface area **1225.** In some embodiments, the facial-side surface area **1220** and/or the lingual-side surface area **1225** provide a concave shaped area to allow greater bone growth therein. In some embodiments, the facial-side surface area **1220** and/or the lingual-side surface area **1225** provide a concave shaped area to prevent/minimize pressure between the bone and the head section **1265** during and/or immediately after the procedure. Preventing and/or minimizing pressure between the bone and the head section **1265** during and/or immediately after the procedure prevent resorption of the bone around the head section **1265** and/or allows increased bone formation around the head section **1265.** In some embodiments, the facial-side surface area **1220** and/or the lingual-side surface area **1225** provide a concave shaped area to allow bone and/or soft tissue growth therein.

In some embodiments, the dental implant fixture **1260** comprises the longitudinal groove **1236** to allow bone growth therein to prevent the implant fixture **1260** from vertical and rotational movements within the patient's jawbone. In some embodiments, the facial-side surface area **1220** and/or the lingual-side surface area **1225** provide an area where bone growth can grow therein to prevent the implant fixture **1260** from vertical and rotational movements within the patient's jawbone.

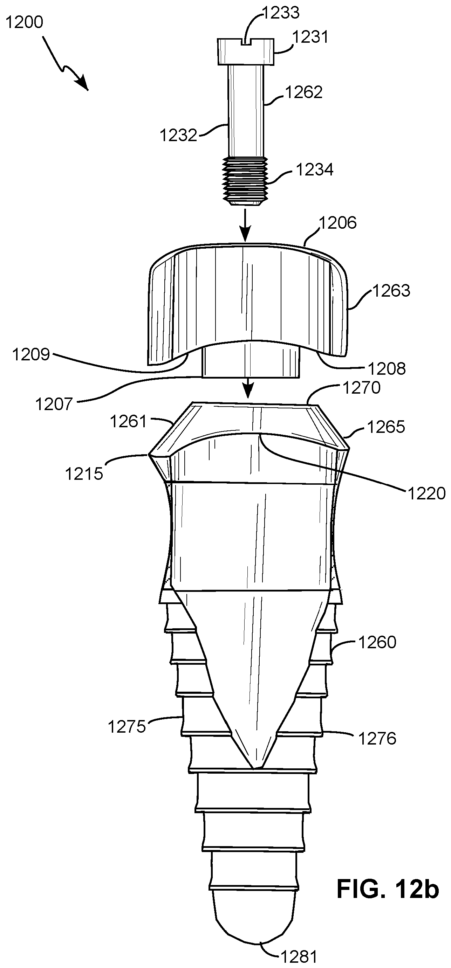

In some embodiments, the shaft section **1275** comprises an outer screw thread **1276** (shown in **Figure 12b**) extending along at least a portion of its length. In some embodiments, the outer screw thread **1276** is continuous. In some embodiments, the outer screw thread **1276** is V-Thread, Square Thread, Buttress Thread, Reverse Buttress Thread or a combination of two or more of these threads. In some embodiments, the shaft section **1275** comprises a substantially longitudinal groove or back cut (not shown) extending from the distal end **1281** towards the head section **1265.** The longitudinal groove (not shown) provides a greater surface area into which bone growth is formed to prevent the implant fixture **1260** from vertical and rotational movements within the jawbone.

In some embodiments, the shaft section **1275** comprises a plurality of spaced apart transverse annular grooves **1299** (shown in **Figure 12a**) extending along at least a portion of its length to provide a greater surface area into which bone growth is formed to prevent the implant fixture **1260** from vertical and rotational movements within the jawbone.

Referring to **Figures 12a****-b,** in some embodiments, the healing cap **1263** comprises a distal end **1206** with a circular opening to accommodate the shaft segment **1232** of the bolt member **1262.** Referring to **Figure 12a****-b,** in some embodiments, the healing cap **1263** comprises a proximal portion **1208** with a protruding engagement end **1207** extending there from.

According to some embodiments, the proximal portion **1208** comprises a bevel surface **1209.** According to some embodiments, the beveled surface **1209** matches perfectly the bevel periphery surface **1261** of proximal end **1270.**

According to some embodiments, the proximal portion **1208** comprises a flat surface **1209.** According to some embodiments, the flat surface **1209** matches perfectly the flat surface **1261** of proximal end **1270.** According to some embodiments, the proximal portion **1208** is elliptically shaped. According to some embodiments, the proximal portion **1208** is triangularly shaped. According to some embodiments, the proximal portion 1208 is circularly shaped.

According to some embodiments, the proximal portion **1208** comprises a surface **1209.** According to some embodiments, the surface **1209** matches perfectly the surface **1261** of proximal end **1270.**

In some embodiments, the proximal portion **1208** comprises a long-axis and a short axis. In some embodiments, the proximal portion **1208** comprises at least one narrower facial-side surface area **1320** and at least one wider interproximal-side surface area **1315.** In some embodiments, the facial-side surface area **1320** is substantially similar to the facial-side surface area **1220.** In some embodiments, the interproximal-side surface area **1315** is substantially similar to the interproximal-side surface area **1215.** In some embodiments, the facial-side surface area **1320** is concaved toward the center of the healing cap **1263.**

In some embodiments, the proximal portion **1208** comprises a narrower lingual-side surface area **1325** and at least one wider interproximal-side surface area **1330.** In some embodiments, the lingual-side surface area **1325** is substantially similar to the lingual-side surface area **1225.** In some embodiments, the interproximal-side surface area **1330** is substantially similar to the interproximal-side surface area **1230.** In some embodiments, the lingual-side surface area **1325** is concaved toward the center of the healing cap **1263.**

In some embodiment, the healing cap **1263** is configured to couple with the head section **1265** as shown in **Figures 12a****-b.** In some embodiment, the healing cap **1263** is configured to couple with the head section **1265** so as to align the facial-side surface area **1320** with the facial-side surface area **1220.** In some embodiment, the healing cap **1263** is configured to couple with the head section **1265** so as to align the interproximal-side surface area **1315** with the interproximal-side surface area **1215.** In some embodiment, the healing cap **1263** is configured to couple with the head section **1265** so as to align the lingual-side surface area **1325** with the lingual-side surface area **1225.** In some embodiment, the healing cap **1263** is configured to couple with the head section **1265** so as to align the interproximal-side surface area **1330** with the interproximal-side surface area **1230.**

In some embodiments, the facial-side surface area **1320** and/or the lingual-side surface area **1325** provide an area for bone growth therein to compensate for jawbone deterioration adjacent to the healing cap **1263** due to craniofacial growth. In some embodiments, the facial-side surface area **1320** and/or the narrower lingual-side surface area **1325** provide an arch shaped area for bone growth therein to compensate for jawbone deterioration adjacent to the healing cap **1263** due to craniofacial growth. In some embodiments, the facial-side surface area **1320** and/or the narrower lingual-side surface area **1325** provide a flat area for bone growth to compensate for jawbone deterioration adjacent to the healing cap **1263** due to craniofacial growth. In some embodiments, the facial-side surface area **1320** and/or the narrower lingual-side surface area **1325** provide a concave shaped area for bone growth therein to compensate for jawbone deterioration adjacent to the healing cap **1263** due to craniofacial growth. Increasing bone volume and/or soft tissue volume adjacent to the facial-side surface area **1320** and/or the narrower lingual-side surface area **1325** prevents early exposure of the healing cap **1263.**

In some embodiments, the facial-side surface area **1320** and/or the lingual-side surface area **1325** provide a concave shaped area to improve bone formation due to the gap between the existing bone and the facial-side surface area **1320** and/or the lingual-side surface area **1325.** In some embodiments, the facial-side surface area **1320** and/or the lingual-side surface area **1325** provide a concave shaped area to allow greater bone growth therein. In some embodiments, the facial-side surface area **1320** and/or the lingual-side surface area **1325** provide a concave shaped area to prevent/minimize pressure between the bone and the healing cap **1263** during and/or immediately after the procedure. Preventing and/or minimizing pressure between the bone and the healing cap **1263** during and/or immediately after the procedure prevent resorption of the bone around the healing cap **1263** and/or allows increased bone formation around the healing cap **1263.** In some embodiments, the facial-side surface area **1320** and/or the lingual-side surface area **1325** provide a concave shaped area to allow bone and/or soft tissue growth therein.

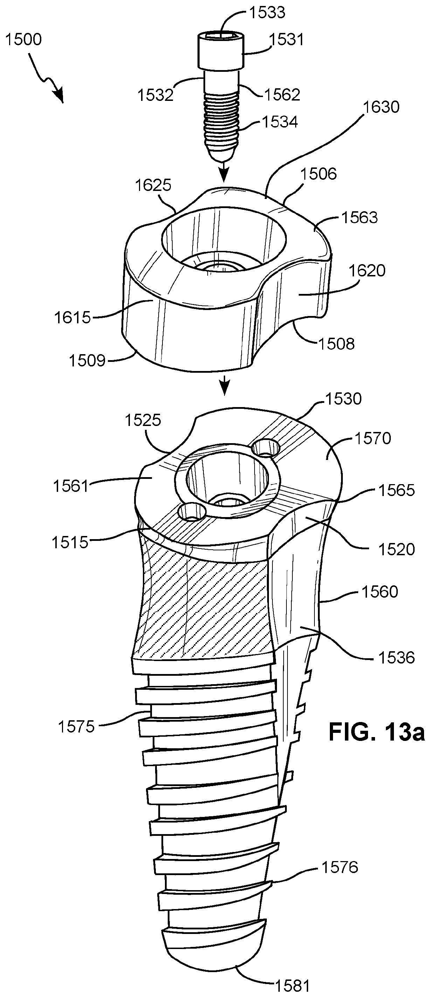

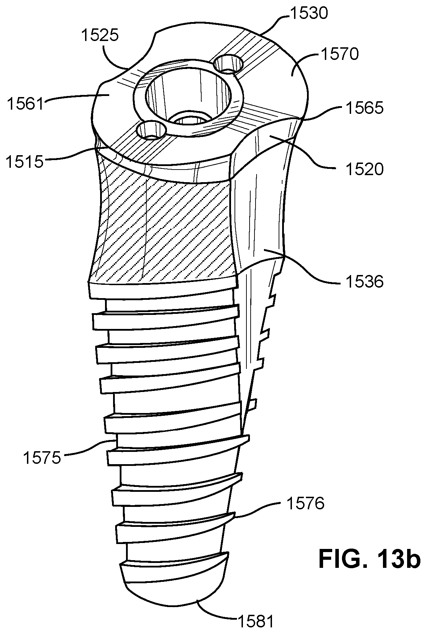

Referring to **Figures 13a****-b,** a dental implant system **1500** is shown according to the present disclosure. In some embodiments, the dental implant system **1500** comprises a bolt member **1562,** a healing cap **1563,** and a dental implant fixture **1560.** According to some embodiments, the dental implant system **1500** further comprises an abutment member (not shown).

In some embodiments, the bolt member **1562** comprises a head segment **1531** and a shaft segment **1532.** In some embodiments, the head segment **1531** is generally disc shaped with a top notch **1533** or any other suitable means to accommodate a driving tool, for example, a screwdriver or any other tool for rotating the bolt member **1562.** In some embodiments, the shaft segment **1532** has one end coupled with the head segment **1531.** In some embodiments, the shaft segment **1532** comprises an outer screw threads **1534** which are located opposite from the head segment **1531** and extend along at least a portion of its length.

Referring to **Figures 13a****-b,** a dental implant fixture **1560** is shown according to the present disclosure. In some embodiments presently disclosed, the dental implant fixture **1560** comprises a head section **1565** with a proximal end **1570.** In some embodiments, the fixture **1560** comprises an elongated shaft section **1575** with a distal end **1581.** In some embodiments, the head section **1565** is integrally coupled with the shaft section **1575** to form a one-piece implant fixture **1560.** This prevents bacteria or other infection growth between the head section and the shaft section of the implant fixture **1560.** In some embodiments, the elongated shaft section **1575** is tapered. According to some embodiments, the head section **1565** is elliptically shaped. According to some embodiments, the head section **1565** is triangularly shaped. According to some embodiments, the head section **1565** is circularly shaped.

In some embodiments, the implant fixture **1560** comprises a stepped interior closed bore (not shown) extending partially downward from the proximal end **1570** into the shaft section **1575.** In some embodiments, the stepped interior closed bore (not shown) is off-center. In some embodiments, the interior closed bore (not shown) comprises inner screw threads (not shown) along at least a portion of its length and an annular shelf (not shown) located above the inner screw threads (not shown). In some embodiment, the inner screw threads (not shown) are configured to accommodate the outer screw threads **1534** of the bolt member **1562.**

Referring to **Figures 13a****-b,** in some embodiments, the proximal end **1570** has a surface **1561** comprising a long-axis and a short axis. According to some embodiments, the surface **1516** is flat. According to some embodiments, the surface **1516** is beveled. In some embodiments, the head section **1565** comprises at least one narrower facial-side surface area **1520** and at least one wider interproximal-side surface area **1515.** The facial-side surface area **1520** accommodates the contour of the gingival tissue at the facial-side of the patient's oral cavity, which is located adjacent to the interior surface of the patient's lip, while the interproximal-side surface area **1515** accommodates the contour of the gingival tissue at the interproximal-side of the patient's oral cavity which is located adjacent to the patient's other tooth and/or implant. In some embodiments, the facial-side surface area **1520** is concaved toward the center of the surface **1561.**

In some embodiments, the head section **1565** comprises a narrower lingual-side surface area **1525** and at least one wider interproximal-side surface area **1530.** The lingual-side surface area **1525** accommodates the contour of the gingival tissue at the lingual-side of the patient's oral cavity which is located adjacent to the patient's tongue or palate, while the interproximal-side surface area **1530** accommodates the contour of the gingival tissue at the interproximal-side of the patient's oral cavity which is located adjacent to the patient's other tooth and/or implant. In some embodiments, the lingual-side surface area **1525** is concaved toward the center of the surface **1561.**

In some embodiments, the facial-side surface area **1520** and/or the lingual-side surface area **1525** provide an area for bone growth therein to compensate for jawbone deterioration adjacent to the implant fixture **1560** due to craniofacial growth. In some embodiments, the facial-side surface area **1520** and/or the narrower lingual-side surface area **1525** provide an arch shaped area for bone growth therein to compensate for jawbone deterioration adjacent to the implant fixture **1560** due to craniofacial growth. In some embodiments, the facial-side surface area **1520** and/or the narrower lingual-side surface area **1525** provide a flat area for bone growth to compensate for jawbone deterioration adjacent to the implant fixture **1560** due to craniofacial growth. In some embodiments, the facial-side surface area **1520** and/or the narrower lingual-side surface area **1525** provide a concave shaped area for bone growth therein to compensate for jawbone deterioration adjacent to the implant fixture **1560** due to craniofacial growth. Increasing bone volume and/or soft tissue volume adjacent to the facial-side surface area **1520** and/or the narrower lingual-side surface area **1525** prevents early exposure of the implant fixture **1560.**

In some embodiments, the facial-side surface area **1520** and/or the lingual-side surface area **1525** provide a concave shaped area to improve bone formation due to the gap between the existing bone and the facial-side surface area **1520** and/or the lingual-side surface area **1525.** In some embodiments, the facial-side surface area **1520** and/or the lingual-side surface area **1525** provide a concave shaped area to allow greater bone growth therein. In some embodiments, the facial-side surface area **1520** and/or the lingual-side surface area **1525** provide a concave shaped area to prevent/minimize pressure between the bone and the head section **1565** during and/or immediately after the procedure. Preventing and/or minimizing pressure between the bone and the head section **1565** during and/or immediately after the procedure prevent resorption of the bone around the head section **1565** and/or allows increased bone formation around the head section **1565.** In some embodiments, the facial-side surface area **1520** and/or the lingual-side surface area **1525** provide a concave shaped area to allow bone and/or soft tissue growth therein.

In some embodiments, the dental implant fixture **1560** comprises the longitudinal groove **1536** to allow bone growth therein to prevent the implant fixture **1560** from vertical and rotational movements within the patient's jawbone. In some embodiments, the facial-side surface area **1520** and/or the lingual-side surface area **1525** provide an area where bone growth can grow therein to prevent the implant fixture **1560** from vertical and rotational movements within the patient's jawbone.

In some embodiments, the shaft section **1575** comprises an outer screw thread **1576** (shown in **Figures 13a****-b**) extending along at least a portion of its length. In some embodiments, the outer screw thread **1576** is continuous. In some embodiments, the outer screw thread **1576** is V-Thread, Square Thread, Buttress Thread, Reverse Buttress Thread or a combination of two or more of these threads. In some embodiments, the shaft section **1575** comprises a substantially longitudinal groove or back cut (not shown) extending from the distal end **1581** towards the head section **1565.** The longitudinal groove (not shown) provides a greater surface area into which bone growth is formed to prevent the implant fixture **1560** from vertical and rotational movements within the jawbone.

Referring to **Figures 13a****-b,** in some embodiments, the healing cap **1563** comprises a distal end **1506** with a circular opening to accommodate the shaft segment **1532** of the bolt member **1562.** Referring to **Figure 13a****-b,** in some embodiments, the healing cap **1563** comprises a proximal portion **1508** with a protruding engagement end (not shown) extending there from.

According to some embodiments, the proximal portion **1508** comprises a surface **1509.** According to some embodiments, the beveled surface **1509** matches perfectly the surface **1561** of proximal end **1570.** According to some embodiments, the proximal portion **1508** is elliptically shaped. According to some embodiments, the proximal portion **1508** is triangularly shaped. According to some embodiments, the proximal portion **1508** is circularly shaped.

In some embodiments, the proximal portion **1508** comprises a long-axis and a short axis. In some embodiments, the proximal portion **1508** comprises at least one narrower facial-side surface area **1620** and at least one wider interproximal-side surface area **1615.** In some embodiments, the facial-side surface area **1620** is substantially similar to the facial-side surface area **1520.** In some embodiments, the interproximal-side surface area **1615** is substantially similar to the interproximal-side surface area **1515.** In some embodiments, the facial-side surface area **1620** is concaved toward the center of the healing cap **1563.**

In some embodiments, the proximal portion **1508** comprises a narrower lingual-side surface area **1625** and at least one wider interproximal-side surface area **1630.** In some embodiments, the lingual-side surface area **1625** is substantially similar to the lingual-side surface area **1525.** In some embodiments, the interproximal-side surface area **1630** is substantially similar to the interproximal-side surface area **1530.** In some embodiments, the lingual-side surface area **1625** is concaved toward the center of the healing cap **1563.**

In some embodiment, the healing cap **1563** is configured to couple with the head section **1565** as shown in **Figure 12a****.** In some embodiment, the healing cap **1563** is configured to couple with the head section **1565** so as to align the facial-side surface area **1620** with the facial-side surface area **1520.** In some embodiment, the healing cap **1563** is configured to couple with the head section **1565** so as to align the interproximal-side surface area **1615** with the interproximal-side surface area **1515.** In some embodiment, the healing cap **1563** is configured to couple with the head section **1565** so as to align the lingual-side surface area **1625** with the lingual-side surface area **1525.** In some embodiment, the healing cap **1563** is configured to couple with the head section **1565** so as to align the interproximal-side surface area **1630** with the interproximal-side surface area **1530.**

In some embodiments, the facial-side surface area **1620** and/or the lingual-side surface area **1625** provide an area for bone growth therein to compensate for jawbone deterioration adjacent to the healing cap **1563** due to craniofacial growth. In some embodiments, the facial-side surface area **1620** and/or the narrower lingual-side surface area **1625** provide an arch shaped area for bone growth therein to compensate for jawbone deterioration adjacent to the healing cap **1563** due to craniofacial growth. In some embodiments, the facial-side surface area **1620** and/or the narrower lingual-side surface area **1625** provide a flat area for bone growth to compensate for jawbone deterioration adjacent to the healing cap **1563** due to craniofacial growth. In some embodiments, the facial-side surface area **1620** and/or the narrower lingual-side surface area **1625** provide a concave shaped area for bone growth therein to compensate for jawbone deterioration adjacent to the healing cap **1563** due to craniofacial growth. Increasing bone volume and/or soft tissue volume adjacent to the facial-side surface area **1620** and/or the narrower lingual-side surface area **1625** prevents early exposure of the healing cap **1563.**

In some embodiments, the facial-side surface area **1620** and/or the lingual-side surface area **1625** provide a concave shaped area to improve bone formation due to the gap between the existing bone and the facial-side surface area **1620** and/or the lingual-side surface area **1625.** In some embodiments, the facial-side surface area **1620** and/or the lingual-side surface area **1625** provide a concave shaped area to allow greater bone growth therein. In some embodiments, the facial-side surface area **1620** and/or the lingual-side surface area **1625** provide a concave shaped area to prevent/minimize pressure between the bone and the healing cap **1563** during and/or immediately after the procedure. Preventing and/or minimizing pressure between the bone and the healing cap **1563** during and/or immediately after the procedure prevent resorption of the bone around the healing cap **1563** and/or allows increased bone formation around the healing cap **1563.** In some embodiments, the facial-side surface area **1620** and/or the lingual-side surface area **1625** provide a concave shaped area to allow bone and/or soft tissue growth therein.

While several illustrative embodiments of the invention have been shown and described, numerous variations and alternative embodiments will occur to those skilled in the art. Such variations and alternative embodiments are contemplated, and can be made without departing from the scope of the invention as defined in the appended claims.

As used in this specification and the appended claims, the singular forms "a," "an," and "the" include plural referents unless the content clearly dictates otherwise. The term "plurality" includes two or more referents unless the content clearly dictates otherwise. Unless defined otherwise, all technical and scientific terms used herein have the same meaning as commonly understood by one of ordinary skill in the art to which the disclosure pertains.

The foregoing detailed description of exemplary and preferred embodiments is presented for purposes of illustration and disclosure in accordance with the requirements of the law. It is not intended to be exhaustive nor to limit the invention to the precise form(s) described, but only to enable others skilled in the art to understand how the invention may be suited for a particular use or implementation. The possibility of modifications and variations will be apparent to practitioners skilled in the art. No limitation is intended by the description of exemplary embodiments which may have included tolerances, feature dimensions, specific operating conditions, engineering specifications, or the like, and which may vary between implementations or with changes to the state of the art, and no limitation should be implied there from. Applicant has made this disclosure with respect to the current state of the art, but also contemplates advancements and that adaptations in the future may take into consideration of those advancements, namely in accordance with the then current state of the art. It is intended that the scope of the invention be defined by the Claims as written. Reference to a claim element in the singular is not intended to mean "one and only one" unless explicitly so stated. Moreover, no element, component, nor method or process step in this disclosure is intended to be dedicated to the public regardless of whether the element, component, or step is explicitly recited in the claims.

## Claims

1. An implant fixture (900; 1004; 1260; 1560) implantable into an alveolus of a patient's jawbone, the implant fixture comprising:
an elongated shaft section (915; 1020; 1275; 1575) with a distal end (920; 1025; 1281; 1581); and
a head section (905; 1010; 1265; 1565) with a proximal end (910; 1015; 1270; 1570), the head section comprising:
a narrower facial-side surface area (945; 1055; 1220; 1520) and a narrower lingual-side surface area (955; 1065; 1225; 1525), each providing a concave shaped area for bone growth therein; and
two wider interproximal-side surface areas (950; 960; 1060; 1070; 1215, 1230; 1515, 1530); and
a longitudinal groove (970; 1075; 1236; 1536) extending from the proximal end (910; 1015; 1270; 1570) of the head section (905; 1010; 1265; 1565) partially into the elongated shaft section (915; 1020; 1275; 1575) and configured to allow bone growth therein.

2. The implant fixture (900; 1004; 1260; 1560) in accordance with Claim 1, wherein the narrower facial-side surface area (945; 1055; 1220; 1520) is configured to accommodate contour of a gingival tissue at a facial-side of a patient's oral cavity located adjacent to an interior surface of the patient's cheek.

3. The implant fixture (900; 1004; 1260; 1560) in accordance with Claim 1 or 2, wherein the narrower lingual-side surface area (955; 1065; 1225; 1525) is configured to accommodate contour of a gingival tissue at the lingual-side of the patient's oral cavity which is located adjacent to the patient's tongue.

4. The implant fixture (900; 1004; 1260; 1560) in accordance with any preceding claim,
wherein the head section (905; 1010; 1265; 1565) comprises a first diameter adjacent to the elongated shaft section (915; 1020; 1275; 1575) and a second diameter adjacent to the proximal end (910; 1015; 1270; 1570);
wherein the elongated shaft section comprises a first diameter adjacent to the head section and a second diameter adjacent to the distal end (920; 1025; 1281; 1581); and
wherein the second diameter of the head section is less than the first diameter of the elongated shaft section.

## Patentansprüche

1. Implantatbefestigungsvorrichtung (900; 1004; 1260; 1560), die in eine Alveole des Kieferknochens eines Patienten implantiert werden kann, wobei die Implantatbefestigungsvorrichtung umfasst:
einen länglichen Schaftabschnitt (915; 1020; 1275; 1575) mit einem distalen Ende (920; 1025; 1281; 1581); und
einen Kopfabschnitt (905; 1010; 1265; 1565) mit einem proximalen Ende (910; 1015; 1270; 1570), wobei der Kopfabschnitt umfasst:
einen schmaleren gesichtsseitigen Oberflächenbereich (945; 1055; 1220; 1520) und einen schmaleren zungenseitigen Oberflächenbereich (955; 1065; 1225; 1525), der jeweils einen konkav geformten Bereich für das Knochenwachstum darin bereitstellen; und
zwei breitere interproximal-seitige Oberflächenbereichen (950; 960; 1060; 1070; 1215, 1230; 1515, 1530); und
eine längliche Nut (970; 1075; 1236; 1536), die sich vom proximalen Ende (910; 1015; 1270; 1570) des Kopfabschnitts (905; 1010; 1265; 1565) teilweise in den länglichen Schaftabschnitt (915; 1020; 1275; 1575) erstreckt und so ausgebildet ist, dass sie Knochenwachstum darin ermöglicht.

2. Implantatbefestigungsvorrichtung (900; 1004; 1260; 1560) nach Anspruch 1, wobei der schmalere gesichtsseitige Oberflächenbereich (945; 1055; 1220; 1520) dazu ausgebildet ist, die Kontur eines gingivalen Gewebes an der gesichtsseitigen Seite der Mundhöhle eines Patienten aufzunehmen, die sich angrenzend an eine innere Oberfläche der Wange des Patienten befindet.

3. Implantatbefestigungsvorrichtung (900; 1004; 1260; 1560) nach Anspruch 1 oder 2, wobei der schmalere zungenseitige Oberflächenbereich (955; 1065; 1225; 1525) dazu ausgebildet ist, die Kontur eines gingivalen Gewebes an der zungenseitigen Seite der Mundhöhle des Patienten aufzunehmen, die sich angrenzend an die Zunge des Patienten befindet.

4. Implantatbefestigungsvorrichtung (900; 1004; 1260; 1560) nach einem der vorhergehenden Ansprüche,
wobei der Kopfabschnitt (905; 1010; 1265; 1565) einen ersten Durchmesser benachbart zum länglichen Schaftabschnitt (915; 1020; 1275; 1575) und einen zweiten Durchmesser benachbart zum proximalen Ende (910; 1015; 1270; 1570) aufweist;
wobei der längliche Schaftabschnitt einen ersten Durchmesser benachbart zum Kopfabschnitt und einen zweiten Durchmesser benachbart zum distalen Ende (920; 1025; 1281; 1581) aufweist; und
wobei der zweite Durchmesser des Kopfabschnitts kleiner ist als der erste Durchmesser des länglichen Schaftabschnitts.

## Revendications

1. Dispositif de fixation d'implant (900; 1004 ; 1260 ; 1560) implantable dans une alvéole de la mâchoire d'un patient, le dispositif de fixation d'implant comprenant :
une section d'arbre allongée (915 ; 1020 ; 1275 ; 1575) avec une extrémité distale (920 ; 1025 ; 1281 ; 1581) ; et
une section de tête (905 ; 1010 ; 1265 ; 1565) avec une extrémité proximale (910 ; 1015 ; 1270 ; 1570), la section de tête comprenant :
une zone de surface côté facial plus étroite (945 ; 1055 ; 1220 ; 1520) et une zone de surface côté lingual plus étroite (955 ; 1065 ; 1225 ; 1525), chacune fournissant une zone de forme concave pour une croissance osseuse dans celle-ci ; et
deux zones de surface côté interproximal plus larges (950 ; 960 ; 1060 ; 1070 ; 1215, 1230 ; 1515, 1530) ; et
une rainure longitudinale (970 ; 1075 ; 1236 ; 1536) s'étendant depuis l'extrémité proximale (910 ; 1015 ; 1270 ; 1570) de la section de tête (905 ; 1010 ; 1265 ; 1565) partiellement dans la section d'arbre allongée (915 ; 1020 ; 1275 ; 1575) et configurée pour permettre une croissance osseuse dans celle-ci.

2. Dispositif de fixation d'implant (900 ; 1004 ; 1260 ; 1560) selon la revendication 1, dans lequel la zone de surface côté facial plus étroite (945 ; 1055 ; 1220 ; 1520) est configurée pour accueillir le contour d'un tissu gingival au niveau d'un côté facial de la cavité buccale d'un patient situé adjacent à une surface intérieure de la joue du patient.

3. Dispositif de fixation d'implant (900 ; 1004 ; 1260 ; 1560) selon la revendication 1 ou 2, dans lequel la zone de surface côté lingual plus étroite (955 ; 1065 ; 1225 ; 1525) est configurée pour accueillir le contour d'un tissu gingival au niveau du côté lingual de la cavité buccale du patient qui est situé adjacent à la langue du patient.

4. Dispositif de fixation d'implant (900 ; 1004 ; 1260 ; 1560) selon l'une quelconque des revendications précédentes,
dans lequel la section de tête (905 ; 1010 ; 1265 ; 1565) comprend un premier diamètre adjacent à la section d'arbre allongée (915 ; 1020 ; 1275 ; 1575) et un deuxième diamètre adjacent à l'extrémité proximale (910 ; 1015 ; 1270 ; 1570) ;
dans lequel la section d'arbre allongée comprend un premier diamètre adjacent à la section de tête et un deuxième diamètre adjacent à l'extrémité distale (920 ; 1025 ; 1281 ; 1581) ; et
dans lequel le deuxième diamètre de la section de tête est inférieur au premier diamètre de la section d'arbre allongée.
